# FASCICULE DE BREVET EUROPEEN

(11) **EP 4 203 664 B1**
(45) Date de publication et mention de la délivrance du brevet: **17.06.2026**
(21) Numéro de dépôt: 21801587.3
(22) Date de dépôt: 04.10.2021
(51) Int. Cl.: A01B 39/18, A01B 79/00, A01B 69/00, A01B 76/00, A01M 21/02

(54) **PROCÉDÉ D'ENTRETIEN AUTOMATISÉ D'UN TERRAIN AGRICOLE ET SYSTÈME ASSOCIÉ**
VERFAHREN ZUR AUTOMATISIERTEN PFLEGE VON LANDWIRTSCHAFTLICHEM LAND UND ZUGEHÖRIGES SYSTEM
METHOD FOR AUTOMATED MAINTENANCE OF AGRICULTURAL LAND AND ASSOCIATED SYSTEM

(43) Date de publication de la demande: 05.07.2023
(73) Titulaire: Cyclair, 86460 Pressac (FR)
(72) Inventeur: GORRY, Sébastien, 86460 PRESSAC (FR)
(74) Mandataire: Santarelli
(86) Numéro de dépôt international: PCT/FR2021/051715
(87) Numéro de publication internationale: WO 2022/069846

(56) Documents cités:
- WO-A1-2020/221981
- WO-A2-2021/048848
- RU-C1- 2 710 163
- US-A1- 2017 127 606

## Description

### DOMAINE TECHNIQUE DE L'INVENTION

Le domaine de l'invention est celui de l'agriculture.

Plus précisément, l'invention concerne un procédé de désherbage automatisé d'un terrain agricole et un système autonome associé.

L'invention trouve notamment des applications dans le cadre la grande culture, en particulier pour lutter contre les plantes secondaires, appelées adventices ou plus couramment connues sous le terme « mauvaises herbes », poussant en lieu et place des plantes principales cultivées sur le terrain agricole.

### ÉTAT DE LA TECHNIQUE

La lutte contre les adventices est importante pour avoir un rendement notable dans un champ de culture car les adventices peuvent devenir les plantes prépondérantes sur un terrain, ralentissant de facto la croissance de la plante cultivée sur le terrain. Il convient de souligner que cette lutte est généralement importante dans les premières semaines de culture lorsque la plante cultivée n'a pas encore atteint un stade de développement suffisamment important pour être la plante prépondérante.

Il est ainsi connu de l'art antérieur des techniques d'entretien par désherbage d'un terrain agricole.

Ces techniques de désherbage font généralement appel à des herbicides tels que le glyphosate, épandus sur de grandes surfaces afin de lutter contre des adventices.

L'inconvénient majeur de ces techniques est que les produits utilisés, bien qu'efficaces, sont généralement néfastes pour l'écosystème environnant.

Ainsi, la législation devenant de plus en plus contraignante sur l'utilisation de tels produits phytosanitaires, restreignant à la fois les périodes de traitement et le panel de matière actives afin de réduire les résidus dans les productions végétales et la pollution diffuse dans le milieu naturel, d'autres techniques de désherbage, telles que par exemple mécanique, sont de plus en plus privilégiées.

Ces techniques, généralement fastidieuses, nécessitent un suivi régulier d'un terrain agricole pour effectuer les opérations de désherbage en temps utile dans le but d'éviter que les adventices ne deviennent prépondérantes sur le champ de culture.

Pour remédier à ces inconvénients, il a ainsi été développé des techniques d'automatisation de ces tâches de désherbage en reconnaissant automatiquement des adventices sur lesquelles une action de désherbage est opérée.

Toutefois, ces techniques sont basées généralement sur un passage régulier sur un terrain agricole, afin de pouvoir effectuer l'opération de désherbage au plus tôt, ce qui présente l'inconvénient d'être chronophage et très coûteux d'un point de vue énergétique.

Dans un souci d'automatisation, il a également été développé des techniques utilisant des drones dans un but d'effectuer une cartographie du terrain. De tels exemples sont notamment décrit dans la demande de brevet américain US2017/0127606 pour guider des engins agricoles non autonomes en fonction du relief d'un terrain et dans le brevet russe RU2710163 pour identifier une zone de culture anormale et y guider un engin agricole pour traiter cette zone de culture. Le brevet russe décrit notamment un détourage d'une telle parcelle dans une image en déterminant un contour grâce à un fort contraste, sans spécifiquement reconnaitre l'origine de l'anomalie de culture constatée dans les images acquises.

Aucun des systèmes actuels ne permet de répondre simultanément à tous les besoins requis, à savoir de proposer une technique autonome de désherbage d'un terrain agricole qui soit efficace par rapport aux adventices poussant sur le terrain agricole, sans endommager les cultures présentes, et optimisée énergétiquement.

### EXPOSÉ DE L'INVENTION

### Objectifs

Le principal objectif de l'invention est de proposer une technique de désherbage d'un terrain agricole qui soit efficace, en permettant de lutter en temps utile contre les adventices poussant sur le terrain cultivé.

Un autre objectif important de l'invention est d'assurer une destruction des adventices sans utiliser de produits phytosanitaires néfastes pour l'environnement.

Un autre objectif notable de l'invention est de proposer une technique qui soit autonome notamment dans la planification, l'optimisation et l'exécution des tâches de traitement du terrain agricole.

Un autre objectif de l'invention est de proposer une technique qui soit compétitive avec les moyens de luttes phytosanitaires.

Un autre objectif de l'invention est de proposer une technique qui soit optimisée d'un point de vue énergétique, tout en étant la plus écologique possible.

Un autre objectif de l'invention est de proposer une technique qui soit robuste et adaptée aux grandes cultures.

### Présentation détaillée

À cet effet, l'invention vise, selon un premier aspect, un procédé d'entretien d'un terrain agricole tel que décrit par la revendication 1.

Ainsi, le véhicule autonome se déplace au sein du terrain agricole de manière optimisé en tenant compte de la position relative des différentes zones de culture ainsi que de l'orientation des rangs de chaque zone de culture à traiter.

Il convient de souligner que les zones de culture comprennent chacune des rangs parallèles. Toutefois, les rangs de différentes zones de culture sont rarement parallèles entre eux. L'orientation des rangs de culture correspond généralement aux déplacements d'un engin agricole ayant effectué les semis de la culture établie dans la zone de culture.

Il convient également de souligner que le terrain agricole peut être vaste, notamment dans le cadre d'une grande culture. On entend par grande culture une exploitation comprenant une pluralité de parcelles agricoles de grande surface, généralement discontinues, avec une grande variabilité des sols, des reliefs ou des obstacles naturels ou non (pierres, poteaux électriques, fossés, haies, rivière, etc.).

Ainsi, l'ordre de traitement des zones de culture est priorisé en fonction de la pression agronomique évaluée pour les zones de culture. En d'autres termes, les zones de culture à traiter en priorité sont celles qui ont une pression agronomique plus élevée que les autres, traduisant ainsi la présence d'adventices en plus grande densité et/ou dans un état de développement plus important.

L'évaluation de la pression agronomique permet ainsi d'avoir une information adaptée pour déterminer quelles sont les zones de culture à traiter en priorité et par conséquent d'optimiser les actions du véhicule autonome sur les zones qui ont un besoin urgent d'intervention pour éviter de ralentir le développement de la plante choisie en culture dans la zone.

En outre, le véhicule autonome se déplaçant généralement lentement : de l'ordre de 1 km/h en phase d'entretien et de l'ordre de 5km/h en phase de relocalisation. Par conséquent, l'intervention du véhicule autonome est planifiée de manière optimale grâce à l'évaluation de la pression agronomique. Les zones où la pression agronomique est la plus forte à un instant donné peuvent ainsi être traitées en priorité par le véhicule autonome.

Il convient bien entendu de souligner que la position relative des zones de culture, par rapport à la position du véhicule autonome, et entre elles, est généralement également prise en compte dans l'ordonnancement de la liste de zones de culture à traiter afin d'optimiser les trajets du véhicule autonome tout en priorisant les zones de culture ayant une forte pression agronomique des adventices.

Dans des modes de mise en œuvre particuliers de l'invention, l'étape de génération d'un diagnostic de la pression agronomique comprend une sous étape de reconnaissance automatique de la nature d'une adventice présente dans une image grâce à une méthode d'apprentissage automatique préalablement entraîné sur une base de données d'images d'adventices identifiées.

L'adventice reconnue est généralement une adventice majoritairement présente dans l'image.

La méthode d'apprentissage automatique, qui est par exemple du type réseau de neurones, permet de reconnaitre la présence d'une adventice grâce aux paramètres de la méthode d'apprentissage automatique qui ont été générés lors d'une phase d'entraînement de la méthode d'apprentissage automatique. L'entrainement est généralement effectué en plusieurs étapes afin d'affiner les paramètres de la phase d'apprentissage automatique pour reconnaître au mieux la présence d'une adventice dans une image à partir de la base de données d'images d'adventices préalablement identifiées.

Généralement, l'angle de prise de vue est avantageusement similaire entre les images acquises et les images de la base de données. Par exemple, lorsque les images acquises sont prises de dessus, l'entrainement est effectué sur une base de données d'images prises majoritairement en vue du dessus, c'est-à-dire selon un angle de vue vertical.

Dans des modes de mise en œuvre particuliers de l'invention, l'étape de génération d'un diagnostic de la pression agronomique comprend une sous-étape de prédiction d'une évolution de l'état de développement d'une adventice à un instant donné en fonction d'au moins une donnée météorologique mesurée et/ou prédite.

Ainsi, l'évaluation de la pression agronomique est plus précise car fonction d'au moins une donnée météorologique tel que l'hygrométrie, la température instantanée, la direction du vent. Il convient de souligner que la donnée météorologique peut être mesurée au moment du calcul de la prédiction de l'évolution de l'état de développement à un instant donné, généralement futur. La prédiction peut ainsi être effectué par exemple à un jour, à trois jours, à cinq jours, à une semaine, à dix jours, à quinze jours, à un mois ou à deux mois.

Un paramètre météorologique utilisé pour la prédiction de l'état de développement peut également être prédit au même instant donné ou à un instant donné distinct.

Dans des modes de mise en œuvre particuliers de l'invention, lorsque le procédé d'entretien met en œuvre une pluralité de véhicules autonomes, la liste de zones de culture allouée à un véhicule autonome tient compte de l'ordre des zones de culture à traiter en fonction de la pression agronomique associée à chaque zone de culture et de la position de chaque véhicule autonome à un instant donné.

Dans des modes de mise en œuvre particuliers de l'invention, la liste de zones de culture allouée à un véhicule autonome est élaborée en tenant compte de l'autonomie dudit véhicule à un instant donné par rapport à une station de recharge dudit véhicule.

Ainsi, le véhicule peut retourner à la station, après avoir effectué ses opérations d'entretien des zones de culture qui lui sont allouées, afin de recharger un dispositif de stockage d'énergie, telle qu'une batterie ou un réservoir d'hydrogène, compris à l'intérieur du véhicule autonome.

Dans des modes de mise en œuvre particulier de l'invention, le procédé d'entretien comprend également une étape de reconnaissance de la direction des rangs de la zone de culture et de détermination d'un écartement entre deux rangs à partir d'au moins une image acquise couvrant la zone de culture et/ou à partir d'un enregistrement d'une pluralité de position d'un outil de semis utilisé au cours d'une phase préalable de semis, l'outil de semis comprenant un dispositif de géolocalisation.

Cette étape de reconnaissance est généralement effectuée concomitamment à l'étape d'élaboration de la carte du terrain agricole afin notamment de pouvoir délimiter sur la carte les rangs de culture parallèle au sein d'une zone de culture.

Dans des modes de mise en œuvre particulier de l'invention, le procédé comprend une étape de délimitation automatique d'une zone de culture en analysant la direction des rangs préalablement reconnus.

En d'autres termes, le procédé d'entretien comprend également une étape de délimitation automatique d'une zone de culture sur le terrain agricole par l'intermédiaire d'une reconnaissance automatique de la direction des rangs d'une zone de culture dans au moins une image acquise couvrant ladite zone de culture et/ou à partir d'un enregistrement d'une pluralité de position d'un outil de semis utilisé au cours d'une phase préalable de semis, l'outil de semis comprenant un dispositif de géolocalisation.

Dans des modes de mise en œuvre particulier de l'invention, le procédé d'entretien comprend également une étape préalable d'acquisition d'images du terrain agricole par au moins un dispositif autonome d'acquisition d'images.

Avantageusement, le dispositif autonome d'acquisition d'images est un robot terrestre autonome ou un aérodyne autonome. Le dispositif autonome d'acquisition d'images comprend généralement un moyen de déplacement motorisé tel qu'une roue ou une hélice, ainsi qu'une caméra.

Les images acquises par l'aérodyne autonome sont généralement des images aériennes prises à l'aplomb du terrain agricole afin de limiter les effets de perspective. Toutefois, il peut être prévu que l'aérodyne prenne des images du terrain agricole sous un autre angle de vue.

Un aérodyne autonome peut être par exemple un drone généralement muni d'au moins une hélice apte à conférer une force de portance au drone, ou une aile volante sans hélice.

Dans des modes de mise en œuvre particulier de l'invention, le survol d'un aérodyne est effectué à une altitude maximale de l'ordre de cent mètres par rapport à la surface du terrain agricole pour la cartographie, et/ou à une altitude de l'ordre de trois mètres par rapport au sol pour l'élaboration de la pression agronomique des adventices.

Le vol pour l'élaboration de la pression agronomique dans une zone du terrain agricole est avantageusement effectué à une plus basse altitude que celui effectué pour la cartographie afin d'obtenir une image du sol de meilleure résolution, permettant ainsi de mieux détecter la nature d'une adventice présente dans l'image. Ce vol est généralement qualifié de très basse altitude.

Dans des modes de mise en œuvre de l'invention, le procédé d'entretien comprend une étape de détermination d'au moins une zone d'interdiction de déplacement d'un véhicule autonome sur la carte.

Cette zone d'interdiction peut correspondre à la présence d'un obstacle au libre déplacement d'un véhicule autonome sur le terrain agricole. L'obstacle peut être de tout type, comme la présence d'un poteau, d'un arbre, d'une rivière, etc.

L'établissement d'une zone d'interdiction peut être effectué automatiquement par le dispositif informatique ou manuellement par un opérateur.

Dans des modes de mise en œuvre de l'invention, le procédé d'entretien comprend également une étape d'association d'un type de culture à au moins une zone de culture du terrain agricole.

Ainsi, il est possible d'affiner la valeur de la pression agronomique en fonction de l'évolution du type de culture dans la zone de culture.

En outre, étant donné que chaque culture présente des caractéristiques particulières, il est possible de mieux évaluer les déplacements d'un véhicule autonome en prenant par exemple compte de la largeur type de rang adapté à la culture.

L'invention concerne également, selon un deuxième aspect, un système d'entretien d'un terrain agricole tel que décrit par la revendication 13.

Dans des modes de réalisation particuliers de l'invention, le système d'entretien comprend également au moins un dispositif autonome d'acquisition d'images.

Le dispositif autonome d'acquisition d'images peut être par exemple un robot mobile terrestre, pouvant être appelé par le terme anglais « *rover »,* ou un aérodyne.

Dans des modes de réalisation particuliers de l'invention, le système d'entretien comprend également une station de recharge d'un véhicule autonome et/ou d'un dispositif autonome d'acquisition d'images.

### BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :
- la figure 1 est une vue schématique d'un exemple de mode de réalisation particulier d'un système d'entretien selon l'invention ;
- la figure 2 est une vue synoptique d'un exemple de mode de mise en œuvre d'un procédé d'entretien selon l'invention mettant en œuvre le système d'entretien de la figure 1 ;
- la figure 3 est un exemple d'image du terrain agricole objet de l'entretien au cours d'une étape du procédé d'entretien de la figure 2 ;
- la figure 3A est un exemple de trace obtenu par un outil de semis effectuant une opération de semaison sur une parcelle du terrain agricole de la figure 1 ;
- la figure 3B est un exemple de traitement de la trace de la figure 3A effectué au cours d'une étape du procédé de la figure 2 ;
- la figure 4 est une vue synoptique d'une étape du procédé d'entretien de la figure 2 ;
- la figure 5 est une vue en perspective du véhicule autonome de la figure 1 ;
- la figure 6 est une vue en perspective du drone de la figure 1.

### DESCRIPTION DÉTAILLÉE DE L'INVENTION

La présente description est donnée à titre non limitatif, chaque caractéristique d'un mode de réalisation pouvant être combinée à toute autre caractéristique de tout autre mode de réalisation de manière avantageuse.

On note, dès à présent, que les figures ne sont pas à l'échelle.

### Exemple d'un mode de réalisation particulier

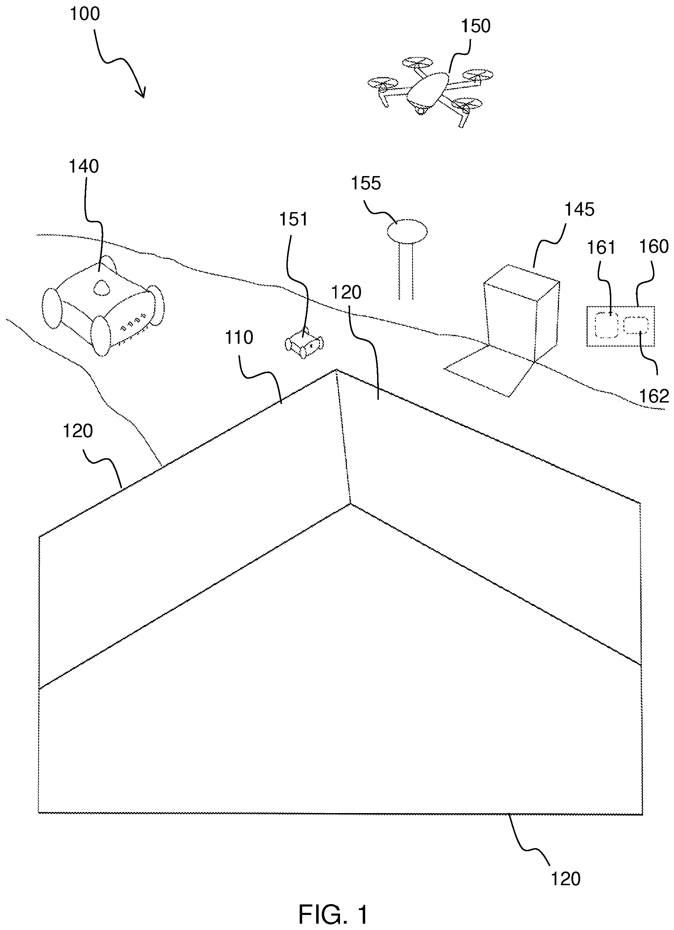

La figure 1 illustre un système 100 d'entretien selon l'invention utilisé pour effectuer des opérations de désherbage d'un terrain agricole 110 comprenant une pluralité de zones 120 de culture, présentant chacune une pluralité de rangs 130 de culture parallèles.

Dans le présent exemple non limitatif de l'invention, le terrain agricole 110 comprend trois zones 120 de culture contigües, formant une parcelle. Toutefois, l'invention peut également s'appliquer à un terrain agricole discontinu, présentant par exemple des parcelles éloignées les unes des autres, chaque parcelle comprenant au moins une zone de culture.

En outre, la plante, telle que par exemple de l'orge, du blé, du maïs ou du colza, choisie en culture dans les trois zones 120 de culture est ici identique mais pourrait tout à fait être distincte.

Le système 100 d'entretien comprend ici au moins un véhicule autonome 140 configuré pour effectuer des opérations d'entretien sur le terrain agricole 110, au moins un drone 150, qui est un aérodyne, configuré pour acquérir au moins une image du terrain agricole 110 de type aérienne en survolant le terrain agricole 110, au moins une station 145 de recharge du véhicule autonome, au moins une station 155 de recharge du drone 150 et un dispositif informatique 160, en l'occurrence un serveur, configuré pour gérer le système 100 d'entretien.

Il convient de souligner que le drone 150 est un dispositif autonome d'acquisition d'images. Alternativement ou en complément du drone 150, un autre dispositif motorisé d'acquisition d'images autonome, tel qu'un deuxième drone ou un robot mobile 151 terrestre acquérant des images partielles du terrain lors de ses déplacements, peut être inclus dans le système 100 d'entretien.

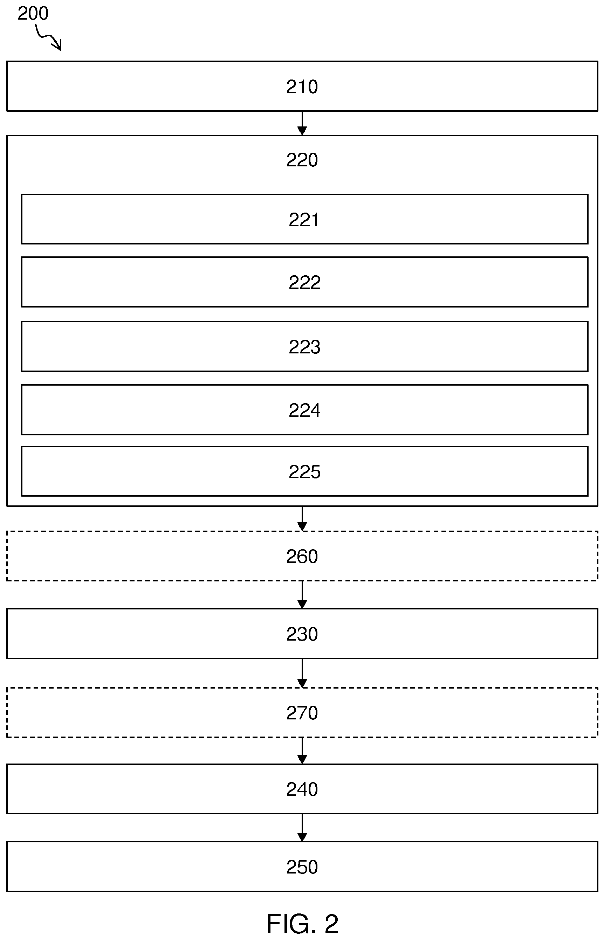

Le dispositif informatique 160 comprenant un processeur 161 et une mémoire informatique 162, traite des instructions d'un procédé 200 d'entretien illustré en figure 2 sous la forme d'un schéma synoptique, stockées dans la mémoire informatique 162.

Le procédé 200 d'entretien comprend une première étape 210 d'acquisition d'images au moyen du drone 150 survolant le terrain agricole 110 à une altitude maximale de l'ordre de cent mètres par rapport à la surface du terrain agricole située à l'aplomb du drone 150. Des coordonnées géographiques, obtenues par exemple par l'intermédiaire d'un dispositif de géolocalisation compris dans le drone 150, ainsi qu'une orientation de l'image par rapport à un point cardinal, sont ici avantageusement associées à chaque image acquise. Les images acquises par le drone 150 sont en outre généralement horodatées.

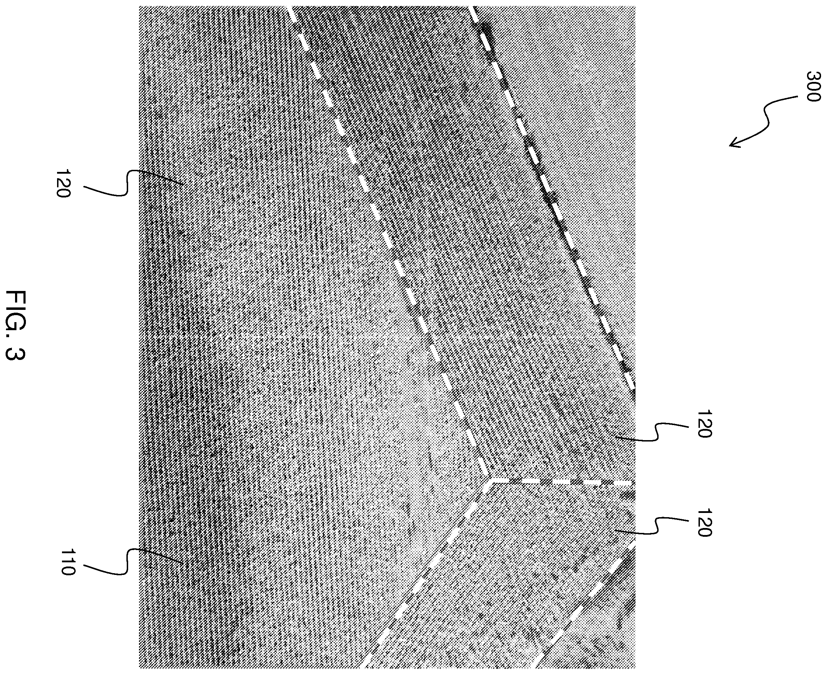

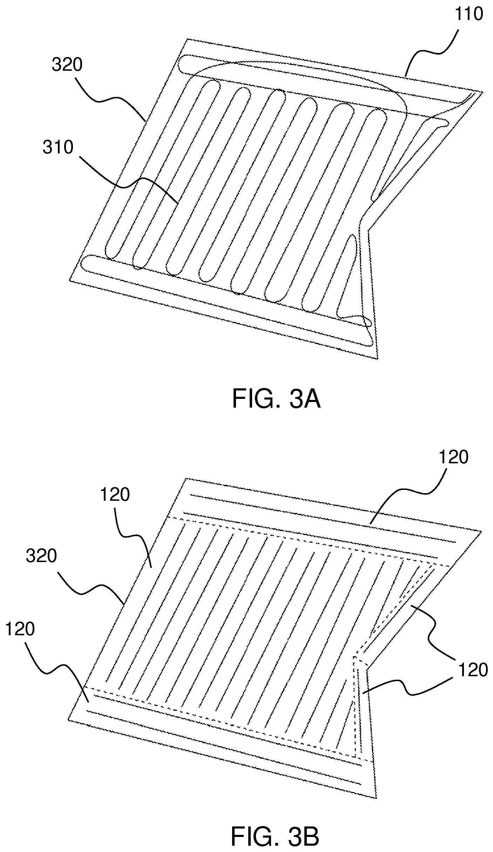

Un exemple d'image 300 du terrain agricole 110 acquise par le drone 150 est présenté en figure 3.

A partir des images acquises, le dispositif informatique 160 élabore au cours d'une deuxième étape 220 du procédé 200 une carte du terrain agricole 110 dans laquelle sont délimitées automatiquement les différentes zones 120 de culture ainsi que les rangs 130 de culture.

A cet effet, une image du terrain agricole 110 est préalablement reconstituée à partir d'une pluralité d'images acquises au moyen du drone 150 au cours d'une première sous-étape 221 de l'étape 220. La reconstitution est effectuée en tenant compte des coordonnées géographiques et de l'orientation associées à chaque image. La position de chaque image peut être ajustée en superposant au moins deux éléments communs à chaque image, en calculant par exemple un critère de netteté au niveau de la superposition des images.

Les rangs 130 de culture sont ensuite reconnus dans l'image reconstituée du terrain agricole 110 au cours d'une deuxième sous-étape 222 de l'étape 220 en utilisant par exemple une méthode de segmentation d'images ou de détection de contours.

Alternativement ou de manière complémentaire, la reconnaissance des rangs de culture est basée sur un enregistrement des positions d'un outil de semis utilisé lors d'une phase préalable de semis de graines sur le terrain agricole 110. L'outil de semis comprend à cet effet un dispositif de géolocalisation, par exemple de type GPS (acronyme du terme anglais « *Global Positioning System* »)*,* fournissant une position à intervalles réguliers. Les enregistrements au cours d'un laps de temps forment une trace sur une carte. En analysant cette trace, il est ainsi possible d'identifier différents rangs 130 de culture en identifiant des parties de la trace qui sont sensiblement droites sur une longueur prédéterminée, par exemple égale à au moins cinq ou dix mètres. Un exemple de trace 310 de l'outil de semis parcourant une parcelle 320 du terrain agricole 110 est illustré en figure 3A. La trace est avantageusement traitée en retirant les parties de trace correspondant à des trajets intermédiaires correspondant à des déplacements de l'outil de semis d'un rang à un autre rang. Les parties de traces restantes correspondent à la position des rangs 130 de culture, comme illustré en figure 3B.

Lorsque la position des rangs 130 est détectée, leur direction est analysée afin de délimiter automatiquement les zones 120 de culture, définies chacune par des rangs de culture sensiblement parallèles, dans l'image reconstituée du terrain agricole 110 au cours d'une troisième sous-étape 223 de l'étape 220. Il convient de souligner que deux rangs de culture sont généralement considérés dans la même zone de culture lorsqu'ils forment un angle inférieur à cinq degrés. Par exemple, trois zones 120 de culture sont déterminées sur l'image 300 de la figure 3. Quant à la figure 3B, la parcelle 320 a été délimitée en cinq zones 120 de culture.

Il convient de souligner qu'un opérateur peut éventuellement intervenir au cours du procédé pour apporter une correction ou un complément à un contour d'une zone 120 de culture délimitée sur la carte.

Un écartement moyen entre deux rangs 130 peut ensuite être déterminé pour chaque zone 120 de culture au cours d'une quatrième sous-étape 224 de l'étape 220. L'écartement moyen est calculé à partir de droites représentant chacune un rang.

Une association d'un type de culture à au moins une zone 120 de culture peut également être effectuée au cours d'une éventuelle cinquième sous-étape 225. Cette association peut être effectuée automatiquement par une reconnaissance du type de culture sur une image ou manuellement par un opérateur.

Au cours d'une troisième étape 230 du procédé 200, une analyse automatique de la carte sur laquelle sont déterminées une position initiale et une position finale du véhicule autonome 140 est effectuée par le dispositif informatique 160 pour allouer au véhicule autonome 140 une liste de zone de culture à traiter en tenant compte de son autonomie pour se déplacer entre la position initiale et la position finale. La position initiale correspond à une position à un instant donné du véhicule autonome 140, cette position peut être instantanée ou prédite. La position finale correspond par exemple quant à elle à la position de la station 145 de recharge du véhicule autonome 140.

Il convient de souligner que le véhicule autonome 140 se déplace généralement lentement, à une vitesse de l'ordre de 0,5 km/h à 2 km/h lors de l'entretien d'une zone 120 de culture, et à une vitesse de l'ordre de 4 à 6 km/h lors d'un trajet de relocalisation, c'est-à-dire hors entretien. Cette relocalisation peut être à l'intérieur ou à l'extérieur d'une zone 120 de culture.

Un plan de déplacement pour le véhicule autonome 140 est alors déterminé au cours d'une quatrième étape 240 du procédé 200. Ce plan de déplacement comprend une trajectoire optimisée pour le véhicule autonome 140 permettant d'utiliser au mieux l'énergie stockée dans un dispositif de stockage d'énergie compris dans le véhicule autonome 140, tout en respectant les contraintes de déplacement selon les rangs de culture de chaque zone de culture traitée par le véhicule autonome 140.

Au cours d'une cinquième étape 250 du procédé 200, le véhicule autonome 140 se déplace en suivant le plan de déplacement préalablement établi.

Afin d'améliorer l'allocation des zones de culture à traiter au véhicule autonome 140, le procédé 200 peut comprendre, préalablement à l'étape 230, une étape 260 de génération par le dispositif informatique 160 d'un diagnostic de la pression agronomique des adventices à l'intérieur de tout ou partie des zones 120 de culture. La pression agronomique due à une adventice est évaluée en fonction de la nature de cette adventice, de sa densité dans une zone de culture et/ou de son état de développement. La pression agronomique d'une adventice traduit la capacité de l'adventice à devenir prépondérante dans la zone de culture analysée, ralentissant par conséquent la croissance de la plante en culture dans la zone.

Ainsi, si la pression agronomique des adventices est faible, la plante choisie en culture peut croitre normalement. Inversement, si la pression agronomique des adventices est importante, par exemple supérieure à un seuil prédéterminé, le développement de la plante choisie en culture est nettement plus faible car les adventices deviennent prépondérantes dans la zone de culture et dérivent les ressources élémentaires, telles que l'eau et le soleil, à leur bénéfice, au détriment du développement de la plante choisie en culture.

A titre illustratif, le tableau 1 présente le nombre de pieds suffisants au m² pour faire chuter le rendement de 5 % de céréales à pailles.

**[Table 1]**

| | |
|---|---|
| Gaillet | 1.8 |
| Folle avoine | 5.3 |
| Coquelicot | 22.0 |
| Matricaire | 22.0 |
| Ray-Grass | 25.0 |
| Vulpin | 26.0 |
| Stellaire | 26.0 |
| Véronique de Perse | 26.0 |
| Véronique F de L | 44.0 |
| Lamier | 44.0 |
| Myosotis | 66.0 |
| Pensée | 133.0 |
| Alchémille | 133.0 |

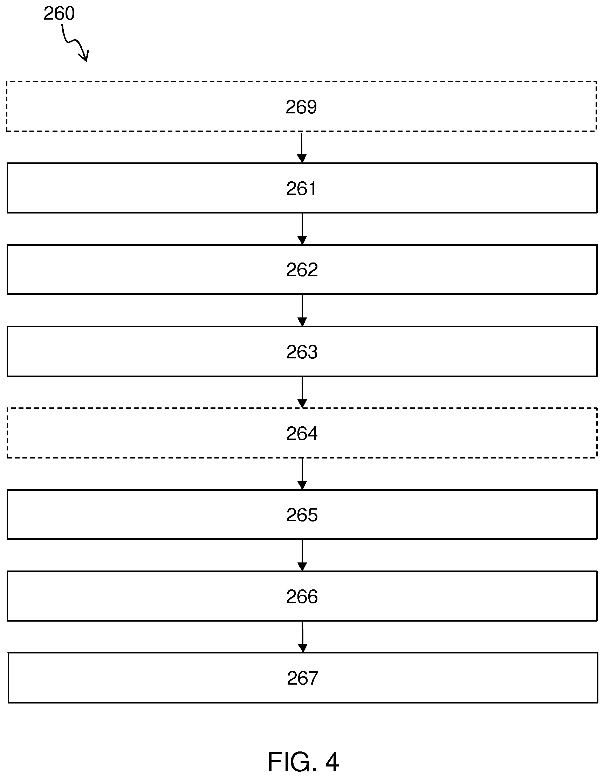

Afin d'évaluer la pression agronomique liée à une adventice dans une zone de culture, une reconnaissance de l'adventice est généralement effectuée au cours d'une première sous-étape 261 de l'étape 260 illustrée par un schéma synoptique spécifique présenté en figure 4, sur au moins une image de tout ou partie de la zone de culture correspondante acquise préalablement.

La reconnaissance est effectuée par exemple par l'intermédiaire d'une méthode d'apprentissage automatique de type réseau de neurones, préalablement entraînée sur une base de données d'images d'adventices dont l'identification a été préalablement effectuée. Plus précisément, le réseau de neurones permet d'indiquer une probabilité de la présence d'une adventice dans une image fournie au réseau de neurones.

Il convient de souligner que les images utilisées pour la reconnaissance sont généralement distinctes de celles utilisées pour la cartographie. Afin d'avoir une bonne reconnaissance, il est en effet préférable d'utiliser des images ayant une très bonne résolution avec un champ de vision plus restreint que celui utilisé pour la cartographie. A cet effet, le drone 150 effectue généralement un survol du terrain agricole, à une altitude plus faible, de l'ordre de trois mètres, afin d'acquérir des images plus précises du sol au cours d'une optionnelle sous-étape préalable 269. Le drone 150 peut également être équipé de plusieurs dispositifs d'acquisition d'images avec des objectifs distincts, l'un dédié à l'acquisition d'images pour la cartographie avec un champ de vision large, c'est-à-dire avec une focale faible, et l'autre dédié à l'acquisition d'images pour la reconnaissance d'une adventice avec un champ de vision plus restreint, c'est-à-dire avec une focale plus importante.

Dans le cas de deux dispositifs autonomes d'acquisition d'images, il peut être envisagé de dédier l'un à l'acquisition d'images pour la cartographie et l'autre à l'acquisition d'images pour la reconnaissance d'une adventice.

Une évaluation du nombre d'adventice de la même espèce dans une image est ensuite effectuée au cours d'une deuxième sous-étape 262 de l'étape 260. Il convient de souligner que l'évaluation du nombre d'adventice sur une surface est équivalent à l'évaluation d'une densité d'adventice par exemple au mètre carré.

L'évaluation du nombre d'adventice peut être par exemple effectuée automatiquement par un comptage des adventices reconnues pour une espèce donnée. Cette évaluation peut être effectuée sur toutes les images couvrant une zone 120 de culture, ou sur un échantillon d'images associées à une zone 120 de culture.

L'état de développement associé à une espèce d'adventice détectée dans une zone 120 de culture est évalué au cours d'une troisième sous-étape 263 de l'étape 260 à partir des images acquises en estimant par exemple une valeur caractéristique liée au développement de l'adventice, telle que la taille de l'adventice, le nombre de feuille, la densité de feuilles, la taille d'une feuille, etc. Cette valeur caractéristique est ensuite comparée à une échelle caractéristique du développement de l'adventice pour évaluer l'état de développement associé.

Dans une variante de ce mode de mise en œuvre particulier de l'invention, l'état de développement est obtenu concomitamment avec l'identification de l'adventice par la méthode d'apprentissage automatique. Auquel cas, la base de données comprend des images d'adventice associées chacune avec un état de développement de l'adventice.

Un modèle de croissance adapté à l'adventice peut être utilisé pour prédire l'évolution à un instant donné de l'état de développement de l'adventice, au cours d'une optionnelle quatrième sous-étape 264 de l'étape 260. De tels modèles de croissance sont par exemple décrits dans le livre « Architecture et croissance des plantes, Modélisation et applications » de P. de Reffye et. al.

Il convient de souligner que le modèle de croissance utilisé peut être agrémenté de données météorologiques actuelles et/ou prédites, telles que par exemple la température, la direction du vent, l'hygrométrie, l'ensoleillement ou la pluviométrie, afin d'améliorer la prédiction de l'évolution de l'état de l'adventice. Cette prédiction peut être effectuée à un jour, à trois jours ou à cinq jours, voire à 1 ou 2 mois.

A partir de l'état de développement de l'adventice, actuel et/ou futur, une évaluation de la pression agronomique associée à chaque adventice détectée dans une zone de culture est effectuée au cours de la cinquième sous-étape 265 de l'étape 260. Par exemple, une adventice ayant un état de développement avancé a une pression agronomique plus importante qu'une adventice ayant un état de développement plus faible.

Il convient de souligner que l'évaluation de cette pression agronomique peut également tenir compte d'une comparaison du développement de l'adventice avec le développement de la plante en culture à un instant donné, soit actuel ou futur.

A titre illustratif, le tableau 2 présente un exemple d'évolution de la pression agronomique de différents types d'adventices, en prenant en compte un modèle simplifié de la croissance de plantes en fonction de la durée d'ensoleillement, de la température et de l'hygrométrie. Les paramètres utilisés sont ici un ensoleillement de 14h par jour, une hygrométrie de 70 % et une température de 10 °C.

**[Table 2]**

| | | Jour | | | | |
|---|---|---|---|---|---|---|
| Zone | Indice d'évolution | J0 | J0+5 | J0+10 | J0+15 | J0+20 |
| PAA 1 | 0,3 | 12 | 14 | 17 | 21 | 27 |
| PAA 2 | 0,2 | 25 | 26 | 28 | 32 | 37 |
| PAA 3 | 1,4 | 2 | 9 | 23 | 45 | 73 |
| PAA 4 | 1,1 | 57 | 62 | 73 | 89 | 110 |
| PAA 5 | 2,1 | 5 | 16 | 37 | 68 | 111 |

Dans le tableau 2, il est possible de constater que la zone PAA 5 pourrait être à traiter en priorité au lieu de la zone PAA 2 car l'adventice, bien que présentant une pression agronomique plus faible au temps 0, aura tendance à pousser très rapidement comme le montre la valeur de la pression agronomique au bout de 20 jours, qui est trois fois supérieure à la pression agronomique de la zone PAA 2. L'ordre des zones 120 de culture à traiter peut ainsi être modifié en tenant compte des pressions agronomiques des adventices prévues à une échéance donnée.

Une valeur représentative de la pression agronomique des adventices est calculée au cours d'une sixième étape 266 de l'étape 260 pour chaque zone 120 de culture en combinant les pressions agronomiques de chaque adventice détectée sur chaque zone 120 de culture. La valeur représentative peut par exemple correspondre à une valeur maximale, à une valeur moyenne des pressions agronomiques ou à une somme des valeurs des pressions agronomiques associées à chaque adventice détectée dans la zone 120 de culture.

Il convient de souligner qu'une pression agronomique ou une valeur représentative de la pression agronomique dans une zone de culture peut être pondérée en fonction du type de plante en culture dans la zone de culture correspondante, afin de tenir compte du rapport entre le développement de la plante en culture et des adventices. En outre, cette pondération permet de mieux comparer les pressions agronomiques des adventices entre différentes zones de culture dans lesquelles des plantes différentes sont cultivées.

Un classement des zones 120 de culture à traiter en priorité est ensuite effectuée au cours d'une septième sous-étape 267 de l'étape 260.

La liste allouée au véhicule autonome 140 au cours de l'étape 230 peut alors tenir compte de l'ordre des zones 120 de culture à traiter en priorité. Une zone 120 de culture dont la pression agronomique des adventices est élevée peut ainsi être traitée en priorité par le véhicule autonome 140. Il convient de souligner que cette zone 120 de culture à traiter en priorité n'est pas nécessairement la zone 120 de culture la plus proche du véhicule autonome 140 qui va ainsi dépenser de l'énergie pour se déplacer jusqu'à cette zone 120 de culture à traiter en priorité.

Lorsque le système 100 d'entretien comprend une pluralité de véhicules autonomes 140, la répartition des zones 120 de culture à traiter entre les différents véhicules autonomes est optimisée en tenant compte de l'ordre des zones 120 de culture à traiter en priorité et de la position de chaque véhicule autonome 140 à un instant donné. Cette optimisation tient généralement également compte de la position d'une ou plusieurs station(s) 145 de recharge en gérant les temps de recharge de chaque véhicule autonome 140.

Il convient en effet de souligner que le nombre de station 145 de recharge peut être inférieur au nombre de véhicule autonome 140. Auquel cas, la recharge de l'ensemble des véhicules autonomes 140 ne pouvant être effectuée simultanément, une gestion astucieuse des périodes de rechargement de chaque véhicule autonome 140 peut être mise en place afin d'éviter d'immobiliser inutilement un véhicule autonome 140.

Afin d'éviter qu'un véhicule autonome 140 ne soit gêné par un obstacle au cours de son déplacement ou ne puisse se déplacer en dehors d'un espace dédié, le procédé 200 peut avantageusement comprendre avant l'étape 240 de détermination d'un déplacement, une étape 270 de détermination d'au moins une zone d'interdiction de déplacement d'un véhicule autonome 140 sur la carte. Cette zone d'interdiction peut être préalablement identifiée automatiquement sur une image par la reconnaissance par exemple d'un obstacle tel qu'un poteau, un arbre, une rivière, un fossé, un relief important, un abord de route, etc. Cette zone d'interdiction peut également être ajoutée à la carte par un opérateur.

Le véhicule autonome 140 peut ainsi entretenir le terrain agricole 110 en respectant l'ordre des zones 120 à traiter qui lui sont alloués.

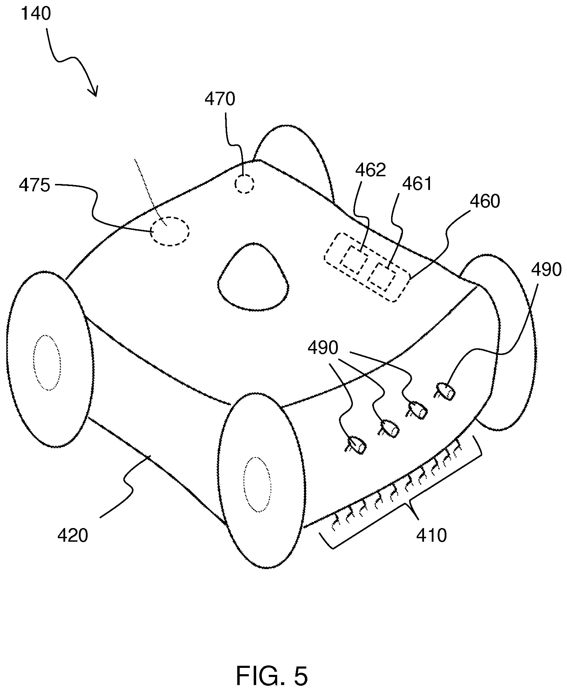

A cet effet, comme illustré plus en détails sur la figure 5, le véhicule autonome 140 est doté d'un jeu d'outils 410 mécaniques spécifiques, généralement de type désherbage, orientés vers le terrain agricole 110. Les outils 410 sont ici situés au-dessous du châssis 420 du véhicule autonome 140.

Le châssis 420 loge un dispositif électronique 460 muni d'un processeur 461 et d'une mémoire informatique 462 permettant notamment de commander le déplacement du véhicule autonome 400 en se basant sur le plan de déplacement préalablement établi.

Pour suivre le plan de déplacement, le véhicule autonome 140 peut comprendre avantageusement un dispositif 470 de géolocalisation par exemple du type géo-positionnement par satellite tel que le système GPS (acronyme du terme anglais « *Global Positioning System* ») ou Galileo.

Il convient de souligner que le plan de déplacement a généralement été communiqué au véhicule autonome 140 par l'intermédiaire d'un dispositif 475 de communication sans fil compris dans le véhicule autonome 400, et relié au dispositif électronique 460.

Pour détecter localement la présence d'une adventice, le véhicule autonome 140 est muni ici de quatre caméras 490, situées à l'avant du véhicule 140, et dont l'axe optique est avantageusement orienté vers le sol sur lequel se déplace le véhicule autonome 140. Ainsi des images acquises à intervalles réguliers par les caméras sont analysées par le dispositif électronique 460 qui peut commander l'action d'un outil mécanique 410 en fonction de l'adventice reconnue dans l'image. La reconnaissance d'une adventice est effectuée ici par une méthode d'apprentissage automatique de type réseau de neurones, préalablement entraîné sur une base de données d'images d'adventices identifiées.

Les images acquises par les caméras 490 peuvent également être transmises au dispositif informatique 160 du système d'entretien 100 afin d'améliorer la cartographie du terrain agricole et la détermination d'une meilleure pression agronomique des adventices. Une corrélation peut ainsi être effectuée entre la pression agronomique des adventices évaluée sur la zone 120 de culture en cours de traitement par le véhicule autonome 400 et la pression agronomique des adventices constatée au cours du traitement. Cette corrélation permet d'améliorer l'évaluation de la pression agronomique des adventices à partir des images acquises au moyen du drone 150.

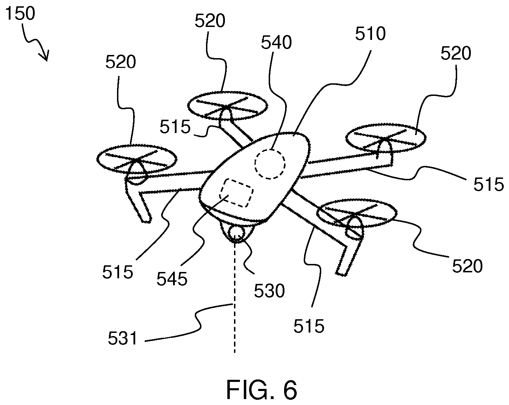

La figure 6 est une vue en perspective du drone 150 du système 100 d'entretien mis en œuvre par le procédé 200 d'entretien.

Le drone 150 comporte un châssis 510 muni de quatre bras d'étendant dans un plan principal du châssis 510. A chaque extrémité des bras 515, est disposée une hélice motorisée 520 tournant chacune dans un plan parallèle au plan principal 511 du châssis 510. Les quatre hélices 520, disposées en regard d'une face dite supérieure du drone 150, offrent ainsi lors de leur actionnement une force de portance du drone 150.

Le drone 150 présente sur une face opposée à la face supérieure, un dispositif d'acquisition d'images 530, en l'occurrence une caméra, dont l'axe optique 531 est ici perpendiculaire au plan principal 511 du châssis 510. L'axe optique 531 est dirigé de telle sorte afin de permettre à la caméra 530 d'acquérir des images aériennes du terrain 110 prises sensiblement à l'aplomb.

Le drone 150 comprend également une batterie 540 de stockage d'énergie électrique ainsi qu'un dispositif 545 de recharge par induction.

Il convient de souligner que le drone 150 peut se déplacer automatiquement ou être piloté par un opérateur.

## Revendications

1. Procédé (200) d'entretien d'un terrain agricole (110), le procédé comprenant des étapes de :
- élaboration (220), par un dispositif informatique (160) comprenant un processeur (161) et une mémoire informatique (162), d'une carte du terrain agricole à partir d'images préalablement acquises du terrain agricole et/ou à partir de données de géolocalisation d'un outil agricole ayant préalablement parcouru le terrain agricole, une pluralité de zones (120) de culture comprenant chacune une pluralité de rang (130) de culture parallèles étant délimitée dans la carte élaborée ;
- allocation (230) à un véhicule autonome (140) d'une liste de zones de culture à traiter en fonction d'une position initiale et d'une position finale du véhicule autonome et de la position des zones de culture à traiter ;
- détermination (240) d'un plan de déplacement pour le véhicule autonome à partir de la liste de zones de culture allouée audit véhicule en respectant l'orientation des rangs des zones de culture à traiter ;
- déplacement (250) du véhicule autonome selon le plan de déplacement établi précédemment ;
le procédé comprenant également une étape (260) de génération par le dispositif informatique d'un diagnostic de la pression agronomique à l'intérieur de tout ou partie des zones de culture à partir d'images préalablement acquises du terrain agricole couvrant chaque zone de culture, le procédé étant **caractérisé en ce que** le diagnostic de la pression agronomique est fonction de la nature de la ou des adventice(s) présente(s) dans la zone de culture, ainsi que de leur nombre et/ou de leur état de développement, la liste de zones de culture à traiter par le véhicule autonome étant ordonnée en fonction de la pression agronomique associée à chaque zone de culture.

2. Procédé selon la revendication précédente, dans lequel l'étape de génération d'un diagnostic de la pression agronomique comprend une sous-étape (261) de reconnaissance automatique de la nature d'une adventice présente dans une image grâce à une méthode d'apprentissage automatique préalablement entraînée sur une base de données d'images d'adventices identifiées.

3. Procédé selon l'une quelconque des revendications précédentes, dans lequel le diagnostic de la pression agronomique dans une zone de culture est également fonction d'une comparaison entre la croissance d'une adventice détectée et la croissance d'une plante cultivée dans ladite zone de culture.

4. Procédé selon l'une quelconque des revendications précédentes, dans lequel l'étape de génération d'un diagnostic de la pression agronomique comprend une sous-étape (264) de prédiction d'une évolution de l'état de développement d'une adventice à un instant donné en fonction d'au moins une donnée météorologique mesurée et/ou prédite.

5. Procédé selon l'une quelconque des revendications précédentes, mettant en œuvre une pluralité de véhicules autonomes, dans lequel la liste de zones de culture allouée à un véhicule autonome tient compte de l'ordre des zones de culture à traiter en fonction de la pression agronomique associée à chaque zone de culture et de la position de chaque véhicule autonome à un instant donné.

6. Procédé selon l'une quelconque des revendications précédentes, dans lequel la liste de zones de culture allouée à un véhicule autonome est élaborée en tenant compte de l'autonomie dudit véhicule à un instant donné par rapport à une station (145) de recharge dudit véhicule.

7. Procédé selon l'une quelconque des revendications précédentes, comprenant également une étape (222) de reconnaissance de la direction des rangs d'une zone de culture et de détermination (224) d'un écartement entre deux rangs à partir d'au moins une image acquise couvrant ladite zone de culture et/ou à partir d'un enregistrement d'une pluralité de position d'un outil de semis utilisé au cours d'une phase préalable de semis, l'outil de semis comprenant un dispositif de géolocalisation.

8. Procédé selon la revendication précédente, comprenant également une étape de délimitation automatique d'une zone de culture en analysant la direction des rangs préalablement reconnus.

9. Procédé selon l'une quelconque des revendications précédentes, comprenant également une étape (210) préalable d'acquisition d'images du terrain agricole par au moins un dispositif autonome (150, 151) d'acquisition d'images.

10. Procédé selon la revendication précédente, dans lequel le dispositif autonome d'acquisition d'images est un aérodyne (150) survolant le terrain agricole à une altitude maximale de l'ordre de cent mètres par rapport à la surface du terrain agricole, pour l'élaboration de la carte du terrain agricole, et/ou à une altitude maximale de l'ordre de trois mètres pour l'élaboration de la pression agronomique des adventices.

11. Procédé selon l'une quelconque des revendications précédentes, comprenant une étape (270) de détermination d'au moins une zone d'interdiction de déplacement d'un véhicule autonome sur la carte.

12. Procédé d'entretien selon l'une quelconque des revendications précédentes, comprenant également une étape d'association d'un type de culture à au moins une zone de culture du terrain agricole.

13. Système d'entretien d'un terrain agricole, **caractérisé en ce qu'**il comprend un dispositif informatique comportant une mémoire informatique stockant des instructions d'un procédé d'entretien selon l'une quelconque des revendications précédentes, et au moins un véhicule autonome doté d'un jeu d'outils mécaniques configurés pour effectuer des opérations d'entretien du terrain agricole.

14. Système d'entretien selon la revendication précédente comprenant également au moins un dispositif autonome d'acquisition d'images.

15. Système d'entretien selon l'une quelconque des revendications 13 à 14 comprenant également une station de recharge d'un véhicule autonome et/ou d'un dispositif autonome d'acquisition d'images.

## Patentansprüche

1. Verfahren (200) zur Pflege eines landwirtschaftlichen Geländes (110), wobei das Verfahren die folgenden Schritte umfasst:
- Erstellen (220) einer Karte des landwirtschaftlichen Geländes durch eine Datenverarbeitungsvorrichtung (160), die einen Prozessor (161) und einen Computerspeicher (162) umfasst, auf der Grundlage von zuvor aufgenommenen Bildern des landwirtschaftlichen Geländes und/oder auf der Grundlage von Geolokalisierungsdaten eines landwirtschaftlichen Werkzeugs, das das landwirtschaftliche Gelände zuvor abgefahren hat, wobei in der erstellten Karte eine Mehrzahl von Kulturzonen (120) abgegrenzt wird, die jeweils eine Mehrzahl von parallelen Kulturreihen (130) umfassen;
- Zuweisen (230) einer Liste von zu bearbeitenden Kulturzonen an ein autonomes Fahrzeug (140) in Abhängigkeit von einer Ausgangsposition und einer Endposition des autonomen Fahrzeugs sowie der Position der zu bearbeitenden Kulturzonen;
- Bestimmen (240) eines Bewegungsplans für das autonome Fahrzeug auf der Grundlage der dem genannten Fahrzeug zugewiesenen Liste von Kulturzonen unter Beachtung der Ausrichtung der Reihen der zu bearbeitenden Kulturzonen;
- Bewegen (250) des autonomen Fahrzeugs gemäß dem zuvor erstellten Bewegungsplan;
wobei das Verfahren außerdem einen Schritt (260) des Erzeugens einer Diagnose des agronomischen Befallsdrucks im Inneren aller oder eines Teils der Kulturzonen durch die Datenverarbeitungsvorrichtung auf der Grundlage von zuvor aufgenommenen Bildern des landwirtschaftlichen Geländes umfasst, die jede Kulturzone abdecken, **dadurch gekennzeichnet, dass** die Diagnose des agronomischen Befallsdrucks von der Art des oder der in der Kulturzone vorhandenen Unkrauts sowie von der Anzahl und/oder dem Entwicklungsstadium abhängt, wobei die Liste der durch das autonome Fahrzeug zu bearbeitenden Kulturzonen in Abhängigkeit von dem jeder Kulturzone zugeordneten agronomischen Befallsdruck geordnet wird.

2. Verfahren nach dem vorhergehenden Anspruch, bei dem der Schritt des Erzeugens einer Diagnose des agronomischen Befallsdrucks einen Teilschritt (261) der automatischen Erkennung der Art eines in einem Bild vorhandenen Unkrauts mittels eines maschinellen Lernverfahrens umfasst, das zuvor auf einer Datenbank mit Bildern identifizierten Unkrauts trainiert wurde.

3. Verfahren nach einem der vorhergehenden Ansprüche, bei dem die Diagnose des agronomischen Befallsdrucks in einer Kulturzone außerdem von einem Vergleich zwischen dem Wachstum eines detektierten Unkrauts und dem Wachstum einer in der genannten Kulturzone angebauten Kulturpflanze abhängt.

4. Verfahren nach einem der vorhergehenden Ansprüche, bei dem der Schritt des Erzeugens einer Diagnose des agronomischen Befallsdrucks einen Teilschritt (264) des Vorhersagens einer Entwicklung des Entwicklungsstadiums eines Unkrauts zu einem gegebenen Zeitpunkt in Abhängigkeit von mindestens einer gemessenen und/oder vorhergesagten meteorologischen Größe umfasst.

5. Verfahren nach einem der vorhergehenden Ansprüche, das eine Mehrzahl von autonomen Fahrzeugen einsetzt, bei dem die einem autonomen Fahrzeug zugewiesene Liste von Kulturzonen die Reihenfolge der zu bearbeitenden Kulturzonen in Abhängigkeit von dem jeder Kulturzone zugeordneten agronomischen Befallsdruck und der Position jedes autonomen Fahrzeugs zu einem gegebenen Zeitpunkt berücksichtigt.

6. Verfahren nach einem der vorhergehenden Ansprüche, bei dem die einem autonomen Fahrzeug zugewiesene Liste von Kulturzonen unter Berücksichtigung der Reichweite des genannten Fahrzeugs zu einem gegebenen Zeitpunkt in Bezug auf eine Ladestation (145) des genannten Fahrzeugs erstellt wird.

7. Verfahren nach einem der vorhergehenden Ansprüche, das außerdem einen Schritt (222) der Erkennung der Richtung der Reihen einer Kulturzone und einen Schritt (224) der Bestimmung eines Abstands zwischen zwei Reihen auf der Grundlage mindestens eines aufgenommenen Bilds, das die genannte Kulturzone abdeckt, und/oder auf der Grundlage einer Aufzeichnung einer Mehrzahl von Position eines Säwerkzeugs umfasst, das während einer vorherigen Aussaatphase verwendet wurde, wobei das Säwerkzeug eine Geolokalisierungsvorrichtung umfasst.

8. Verfahren nach dem vorhergehenden Anspruch, das außerdem einen Schritt der automatischen Abgrenzung einer Kulturzone durch Analyse der zuvor erkannten Reihenrichtung umfasst.

9. Verfahren nach einem der vorhergehenden Ansprüche, das außerdem einen vorherigen Schritt (210) der Aufnahme von Bildern des landwirtschaftlichen Geländes durch mindestens eine autonome Bildaufnahmevorrichtung (150, 151) umfasst.

10. Verfahren nach dem vorhergehenden Anspruch, bei dem die autonome Bildaufnahmevorrichtung ein Luftfahrzeug (150) ist, das das landwirtschaftliche Gelände in einer maximalen Höhe von in der Größenordnung von hundert Metern über der Oberfläche des landwirtschaftlichen Geländes überfliegt, zur Erstellung der Karte des landwirtschaftlichen Geländes, und/oder in einer maximalen Höhe von etwa drei Metern zur Bestimmung des agronomischen Befallsdrucks durch Unkraut.

11. Verfahren nach einem der vorhergehenden Ansprüche, das einen Schritt (270) der Bestimmung mindestens einer Zone umfasst, in der das Bewegen eines autonomen Fahrzeugs auf der Karte untersagt ist.

12. Pflegeverfahren nach einem der vorhergehenden Ansprüche, das außerdem einen Schritt der Zuordnung einer Kulturart zu mindestens einer Kulturzone des landwirtschaftlichen Geländes umfasst.

13. System zur Pflege eines landwirtschaftlichen Geländes, **dadurch gekennzeichnet, dass** es eine Datenverarbeitungsvorrichtung umfasst, die einen Computerspeicher aufweist, der Anweisungen eines Pflegeverfahrens nach einem der vorhergehenden Ansprüche speichert, sowie mindestens ein autonomes Fahrzeug, das mit einem Satz mechanischer Werkzeuge ausgestattet ist, die zur Durchführung von Pflegearbeiten am landwirtschaftlichen Gelände konfiguriert sind.

14. Pflegesystem nach dem vorhergehenden Anspruch, das außerdem mindestens eine autonome Bildaufnahmevorrichtung umfasst.

15. Pflegesystem nach einem der Ansprüche 13 bis 14, das außerdem eine Ladestation für ein autonomes Fahrzeug und/oder eine autonome Bildaufnahmevorrichtung umfasst.

## Claims

1. Method (200) of maintaining an agricultural field (110), the method comprising the steps of:
- generating (220), by a computing device (160) comprising a processor (161) and a computer memory (162), a map of the agricultural field from images previously acquired of the agricultural field and/or from geolocation data of an agricultural tool that has previously traversed the agricultural field, a plurality of crop zones (120) each comprising a plurality of parallel crop rows (130) being delimited in the generated map;
- allocating (230) to an autonomous vehicle (140) a list of crop zones to be treated based on an initial position and a final position of the autonomous vehicle and the position of the crop zones to be treated;
- determining (240) a movement plan for the autonomous vehicle from the list of crop zones allocated to said vehicle, respecting the orientation of the rows of the crop zones to be treated;
- moving (250) the autonomous vehicle according to the previously established movement plan;
the method also comprising a step (260) of generating, by the computing device, a diagnosis of the agronomic pressure within all or part of the crop zones from images previously acquired of the agricultural field covering each crop zone, the method being **characterized in that** the diagnosis of the agronomic pressure is a function of the nature of the weed(s) present in the crop zone, as well as their number and/or their development stage, the list of crop zones to be treated by the autonomous vehicle being ordered according to the agronomic pressure associated with each crop zone.

2. Method according to the preceding claim, wherein the step of generating a diagnosis of the agronomic pressure comprises a sub-step (261) of automatically recognizing the nature of a weed present in an image by means of a machine learning method previously trained on a database of images of identified weeds.

3. Method according to any one of the preceding claims, wherein the diagnosis of the agronomic pressure in a crop zone is also a function of a comparison between the growth of a detected weed and the growth of a cultivated plant in said crop zone.

4. Method according to any one of the preceding claims, wherein the step of generating a diagnosis of the agronomic pressure comprises a sub-step (264) of predicting an evolution of the development stage of a weed at a given point in time based on at least one measured and/or predicted meteorological data item.

5. Method according to any one of the preceding claims, implementing a plurality of autonomous vehicles, wherein the list of crop zones allocated to an autonomous vehicle takes into account the order of the crop zones to be treated according to the agronomic pressure associated with each crop zone and the position of each autonomous vehicle at a given point in time.

6. Method according to any one of the preceding claims, wherein the list of crop zones allocated to an autonomous vehicle is drawn up taking into account the autonomy of said vehicle at a given point in time relative to a recharging station (145) of said vehicle.

7. Method according to any one of the preceding claims, also comprising a step (222) of recognizing the direction of the rows of a crop zone and of determining (224) a spacing between two rows from at least one acquired image covering said crop zone and/or from a recording of a plurality of positions of a seeding tool used during a prior seeding phase, the seeding tool comprising a geolocation device.

8. Method according to the preceding claim, also comprising a step of automatically delimiting a crop zone by analyzing the direction of the previously recognized rows.

9. Method according to any one of the preceding claims, also comprising a prior step (210) of acquiring images of the agricultural field by at least one autonomous image acquisition device (150, 151).

10. Method according to the preceding claim, wherein the autonomous image acquisition device is an aerodyne (150) flying over the agricultural field at a maximum altitude of approximately one hundred meters above the surface of the agricultural field, for generating the map of the agricultural field, and/or at a maximum altitude of approximately three meters for generating the agronomic pressure of the weeds.

11. Method according to any one of the preceding claims, comprising a step (270) of determining at least one zone on the map in which movement of an autonomous vehicle is prohibited.

12. Maintenance method according to any one of the preceding claims, also comprising a step of associating a crop type with at least one crop zone of the agricultural field.

13. A system for maintaining an agricultural field, **characterized in that** it comprises a computing device comprising a computer memory storing instructions of a maintenance method according to any one of the preceding claims, and at least one autonomous vehicle provided with a set of mechanical tools configured to perform maintenance operations on the agricultural field.

14. Maintenance system according to the preceding claim, also comprising at least one autonomous image acquisition device.

15. Maintenance system according to any one of claims 13 to 14, also comprising a recharging station for an autonomous vehicle and/or an autonomous image acquisition device.
